# EUROPÄISCHE PATENTSCHRIFT

(11) **EP 0 742 913 B1**
(45) Veröffentlichungstag und Bekanntmachung des Hinweises auf die Patenterteilung: **11.06.1997**
(21) Anmeldenummer: 95905050.1
(22) Anmeldetag: 11.01.1995
(51) Int. Cl.: G02C 5/22, G02C 5/12

(54) **HALTERUNG FÜR NASENPADS AN EINEM BRILLENGESTELL**
SYSTEM FOR SECURING NOSE PADS TO A SPECTACLE FRAME
SYSTEME DE FIXATION DE PLAQUETTES SUR UNE MONTURE DE LUNETTES

(30) Priorität: 01.02.1994 DE 4402983
(43) Veröffentlichungstag der Anmeldung: 20.11.1996
(73) Patentinhaber: F & W FREY & WINKLER GMBH, 75203 Königsbach-Stein (DE)
(72) Erfinder: WINKLER, Rolf, D-75239 Eisingen (DE)
(74) Vertreter: Frank, Gerhard, Dipl.-Phys.
(86) Internationale Anmeldenummer: DE9500035
(87) Internationale Veröffentlichungsnummer: WO9521399

(56) Entgegenhaltungen:
- DE-A- 2 558 122
- DE-A- 2 712 897
- DE-A- 2 835 116
- DE-A- 3 403 569
- DE-A- 3 934 163
- FR-A- 2 269 097
- FR-A- 2 398 321
- FR-A- 2 492 545

## Beschreibung

### Technisches Gebiet

Die Erfindung betrifft eine Halterung für Nasenpads gemäß dem Oberbegriff des Patentanspruchs 1.

Derartige Halterungen sind in vielfältigsten konstruktiven Ausgestaltungen bekannt geworden, denen alle gemeinsam ist, daß die am Brillengestell befestigbare Stegstütze einerseits und das Nasenpad andererseits durch im wesentlichen korrespondierend geformte Teile oder Teilbereiche miteinander in Eingriff gebracht werden können, so daß eine mehr oder weniger dauerhafte Verbindung dieser für die Trageeigenschaften der Brille wesentlichen Bauteile erzielt wird.

### Stand der Technik

Beispiele für solche Befestigungsmechanismen zeigen beispielsweise die DE-PS 27 32 860, die DE-PS 27 12 897, die DE-OS 28 35 116 und die FR-A-2 492 545.

Auch die gattungsbildende DE-A-25 58 122 zeigt ein solches System.

### Darstellung der Erfindung

Die Ankoppelung des Nasenpads an die Stegstütze ist insofern recht schwierig, da insbesondere wegen der geringen Ausdehnungen der beteiligten Bauteile im Millimeter-Bereich die Definition der Kräfte und Materialbeanspruchungen beim Einschnappen bzw. Herausziehen des Befestigungsteils in die Stegstütze und deren Umsetzung in konkrete Bemaßungsvorgaben sehr schnell zu unbefriedigenden Ergebnissen führen kann, wenn eine optimale konstruktive Anpassung nicht erreicht wird. Dies mag der Grund sein, weshalb sich die in den genannten Patentschriften vorgestellten Systeme trotz ihrer prinzipiellen Funktionstüchtigkeit auf dem Markt nicht durchsetzen konnten.

Der Forderung nach einwandfreier und auch bei dauernder Beanspruchung zufriedenstellender Funktion dieser Bauteile, die auch den Tragekomfort der Brille unterstützen sollten, steht die Forderung nach möglichst einfacher und damit kostengünstiger Herstellung und Bearbeitung dieser Bauteile nicht nach; so sind beispielsweise Lösungen gemäß der DE-PS 28 35 116 nicht akzeptabel, da dort die Stegstütze aus zwei separaten Teilen besteht, die in der Regel miteinander verlötet werden müssen; hier ist also ein separater Arbeitsgang erforderlich, der zudem auch bei sorgfältigster Arbeitsweise notwendigerweise mangelhafte Lötstellen produziert, die wiederum zu einem beträchtlichen Ausschuß dadurch führen, daß die Lötstelle zwischen dem Stegarm und der separat gefertigten Haltebox bricht. Solche Ausfälle betragen in der Größenordnung zwar lediglich 0,5 bis 1 % der Gesamtproduktion, führen aber im Endergebnis dazu, daß bei reklamierter Brille wegen schadhafter Verbindungsstege (abgebrochene Pads) in der Regel die gesamte Brille zum Ausschuß wird, da eine Reparatur bei den meisten Brillenmodellen preislich eher in der Größenordnung des Wertes der gesamten Brille liegt als in der Größenordnung des Wertes der Stegstütze mit angelöteter Box. Der erwähnte Ausschuß führt daher trotz des zahlenmäßig sehr geringen Anteils zu einem überproportionalen Wertverlust in dem Sinne, daß der entstehende Schaden weit über dem Wert der defekten Komponente als solcher liegt. Dies führt immer wieder zu Beanstandungen und Schwierigkeiten seitens der Kunden.

Bei der gattungsgemäßen DE-A-25 58 122 wird diese Situation insofern verbessert, als dort als Stegstütze oder zumindest Teil der Stegstütze ein Stanzteil verwendet werden kann, wodurch eine Vereinfachung erreicht wird.

Dieser Druckschrift und allen weiteren oben genannten Druckschriften ist jedoch gemeinsam, daß die Zielsetzung einer solchen Koppelung zwischen Stegstütze einerseits und Nasenpad andererseits darin besteht, sowohl eine einfache Montage, als auch eine einfache Demontage dieser beiden Teile zu erreichen; der Optiker soll also in die Lage versetzt werden, ein eventuell beschädigtes oder gealtertes Nasenpad möglichst ohne Zuhilfenahme von Werkzeugen wieder aus der Stegstütze herauszuziehen und durch ein neues Bauteil zu ersetzen.

Diese Zielsetzung mag der Grund dafür sein, daß die vorbekannten Lösungen die hierfür erforderliche Elastizität dadurch zu erreichen versuchten, daß entweder der Befestigungsabschnitt des Nasenpads oder der Aufnahmebereich der Stegstütze (wie bei der DE-A-25 58 122) eine Schlitzung aufweisen, um eine geeignete Zusammenpressung bzw. Aufweitung bei der Montage und Demontage zu erreichen.

Diese Schlitzung führt jedoch in den oben angesprochenen Dimensionen im Millimeterbereich zusammen mit unvermeidbaren Fertigungstoleranzen zu einer unzureichenden Definition des Einrast- und Ausrastverhaltens des Nasenpads, da sie offenbar die durch die Bauteilfertigung als solche bereits vorhandenen Toleranzen noch verstärken. Das Resultat dieser Unzulänglichkeiten spiegelt sich dann in der unzufriedenstellenden Funktion wieder, sei es, daß das gewünschte Montage- und Demontageverhalten schwergängiger als geplant in der Praxis realisiert wird, sei es, daß die Verbindung zu locker ist, so daß zwar die Koppelung der beiden Bauteile zufriedenstellend ist, dann jedoch die Gefahr des unbeabsichtigten Verlierens eines Nasenpads überproportional ansteigt.

Die wesentliche Aufgabe der Erfindung besteht daher darin, die gattungsgemäße Nasenpadhalterung so weiterzubilden, daß eine sichere, aber gleichzeitig auch in vorgegebenen Grenzen bewegliche Fixierung des Nasenpads an der Stegstütze gewährleistet ist.

Erfindungsgemäß wird diese Aufgabe gemäß dem kennzeichnenden Teil des Patentanspruchs 1 gelöst.

Ein wesentlicher Grundgedanke der Erfindung besteht darin, daß sowohl die Stegstütze, als auch das Befestigungsteil des Nasenpads einen im wesentlichen ungeteilten Querschnitt aufweisen, d.h., nicht geschlitzt ausgeführt sind, um einen Spielraum zur Montage und Demontage zu schaffen.

Dabei geht die Erfindung von dem Gedanken aus, daß eine Demontage des Nasenpads notfalls auch durch Zerstörung des pilzförmig ausgebildeten vorderen Abschnitts des Befestigungsteils erreicht werden kann, beispielsweise durch Abkneifen mit einer geeigneten Zange. Dies stellt nur einen geringen Nachteil dar, da, wie oben schon erläutert, der Wert eines Nasenpads als solcher nur minimal ist. Der Verzicht auf eine zerstörungsfreie Demontage des Nasenpads schafft aber gerade die Voraussetzungen, die die Zuverlässigkeit und Funktionstüchtigkeit der Halterung wesentlich erhöhen:

Die Ausbildung der Stegstütze aus weitgehend unelastischem (beispielweise metallischem) Material in vollständig geschlossener Ausführung ermöglicht eine äußerst präzise Herstellung beispielsweise aus einem Metall-Rundprofil durch Pressung und Präzisionsstanzung, so daß eine hier einmal festgelegte Bemaßung auch bei mehrtausendfacher Fertigung mit minimalsten Toleranzen beibehalten wird, da eine Aufweitung wie bei den bekannten geschlitzten Versionen, nicht vorgesehen ist.

Entsprechendes gilt für das Befestigungsteil, das ebenfalls ungeschlitzt ist, jedoch aus Kunststoff. Die Anforderungen an Formgebung und Elastizitätseigenschaften des Kunststoffes können hierbei ebenfalls sehr eng vorgegeben sein, da nur die Möglichkeit des problemlosen Einführens des Befestigungsteils in die Stegstütze und dortige Verrastung gegeben sein muß. Es kann also auch hier ein relativ "harter" Kunststoff eingesetzt werden, so daß das Befestigungsteil auch einstückig mit dem Nasenpad als solchen oder einem in diesem enthaltenen Kern ausgebildet sein kann.

Dieses relativ harte Kunststoffmaterial ermöglicht andererseits auch die definierte Ausbildung der Übergangsfläche zwischen den beiden Abschnitten unterschiedlichen Querschnitts, die ihrerseits das "dynamische" Verhalten des Nasenpads vorgibt, nämlich dessen Kipp-und Verschwenkbereich.

Die oben im einzelnen geschilderte Vorgabemöglichkeit für Abmessungen und Materialeigenschaften führen zu minimalen Fertigungstoleranzen in der Großserie und damit gleichbleibenden Trageigenschaften.

Weitere Ausgestaltungen der erfindungsgemäßen Lösung sind den Unteransprüchen zu entnehmen.

### Kurze Beschreibung der Zeichnungen

Es zeigen:
- Figur 1:: Eine perspektivische Gesamtdarstellung der Halterung,
- Figur 2 und 3:: Seiten- und Unteransicht der Stegstütze,

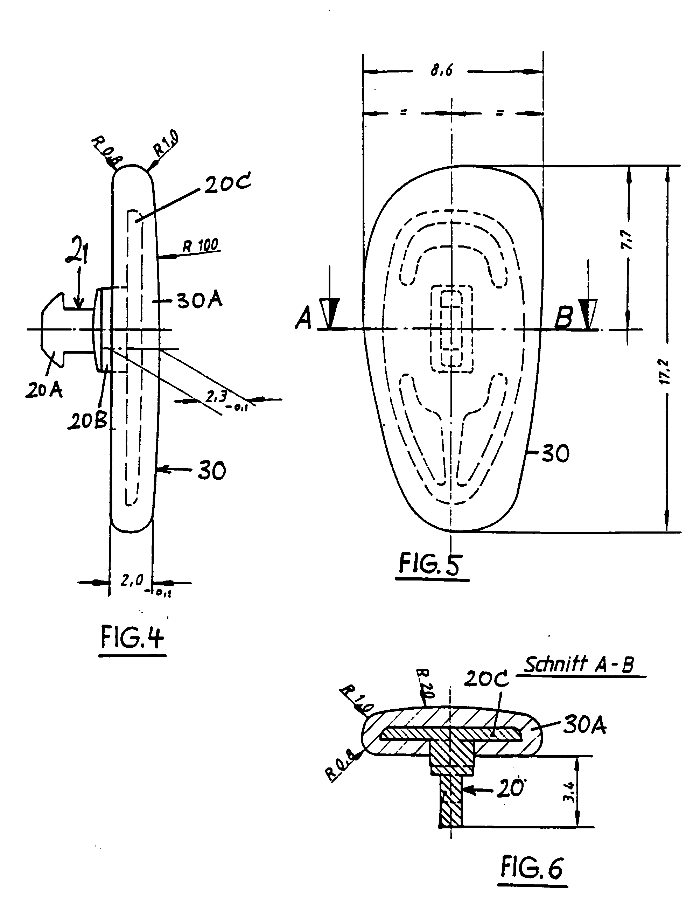

- Figur 4-6:: Seiten- und Frontansichten des Befestigungsteils mit Nasenpad-Kern,
- Figur 7 und 8:: Detaildarstellung des Befestigungsteils nach Figur 5 in Seitenansicht und Aufsicht mit Bemaßung, und
- Figuren 9-11:: Ansichten und Querschnitt des Befestigungsteils mit Kern.

### Beschreibung eines bevorzugten Ausführungsbeispiels:

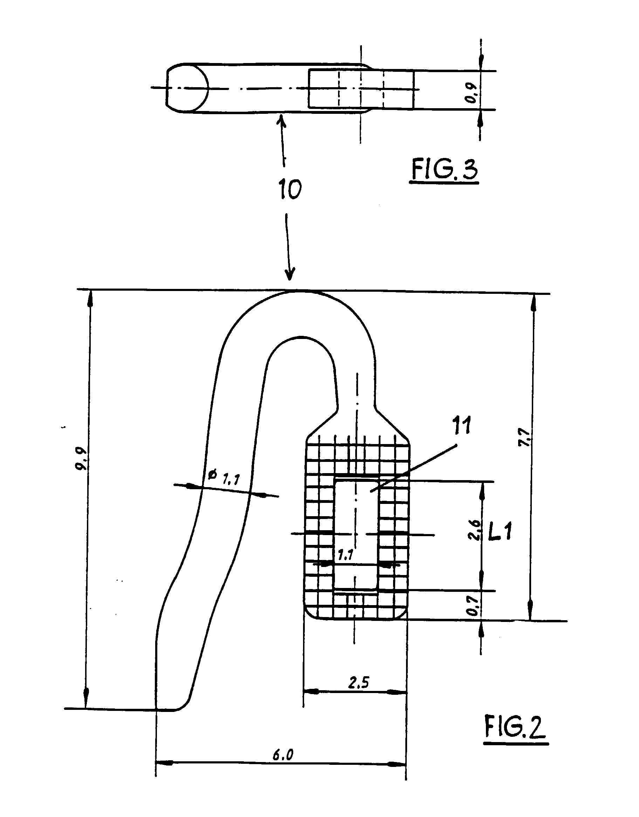

Die Stegstütze 10 besteht aus einem Metalldraht, dessen Ende bis zu einer Dicke von 0,9 mm (Figur 3) verpreßt ist, so daß er eine Breite von etwa 2,5 mm annimmt. In diesem Bereich ist die Aufnahmeöffnung als Langloch 11 mit einer Länge L1 von 2,6 mm und einer Breite von 1,1 mm ausgebildet.

Das Befestigungsteil 20 ist beim dargestellten Ausführungsbeispiel einstückig mit einem Kern 20C des Nasenpads 30 ausgeführt, der mit einem Mantel 30A aus weichem, hautverträglichen Kunststoff wie z.B. Silicon umspritzt ist.

Das Befestigungsteil 20 ist im wesentlichen in zwei Abschnitte unterteilt:

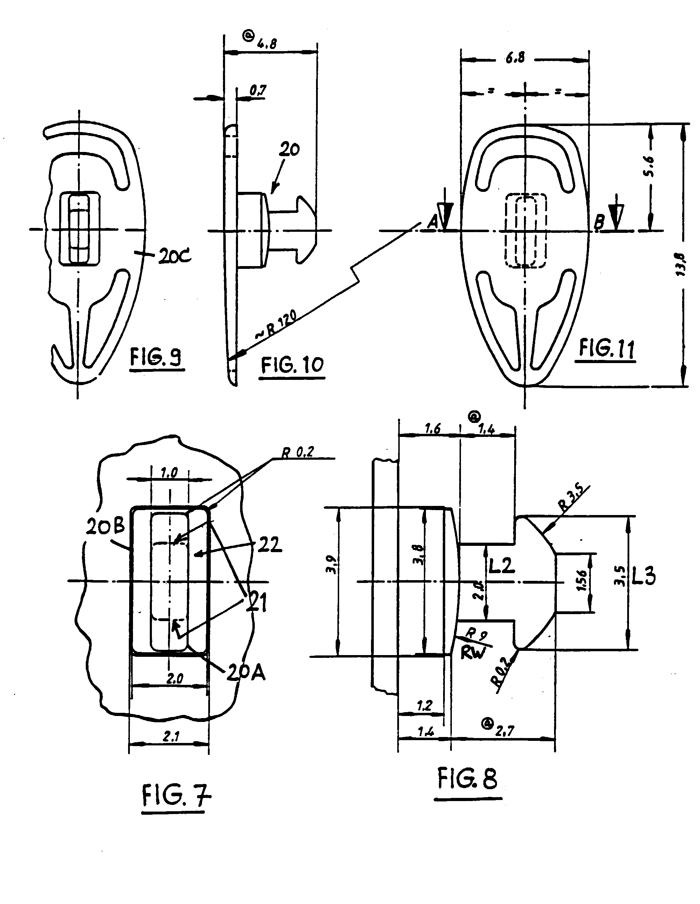

Einen ungeschlitzten, pilzförmig ausgebildeten vorderen Abschnitt 20A, mit einer Einschnürung 21 und einen hinteren Abschnitt 20B, der einen größeren Querschnitt als der erste Abschnitt 20A aufweist. Eine geeignete Bemaßung hierzu ist insbesondere den Figuren 7 und 8 zu entnehmen.

Den Übergang zwischen diesen beiden Abschnitten unterschiedlichen Querschnittes bildet eine Übergangsfläche 22, die nach außen gewölbt ist, wobei beim dargestellten Ausführungsbeispiel nur eine "eindimensionale" Wölbung dargestellt ist, es kann jedoch auch eine kugelausschnittähnliche Wölbung vorgesehen werden.

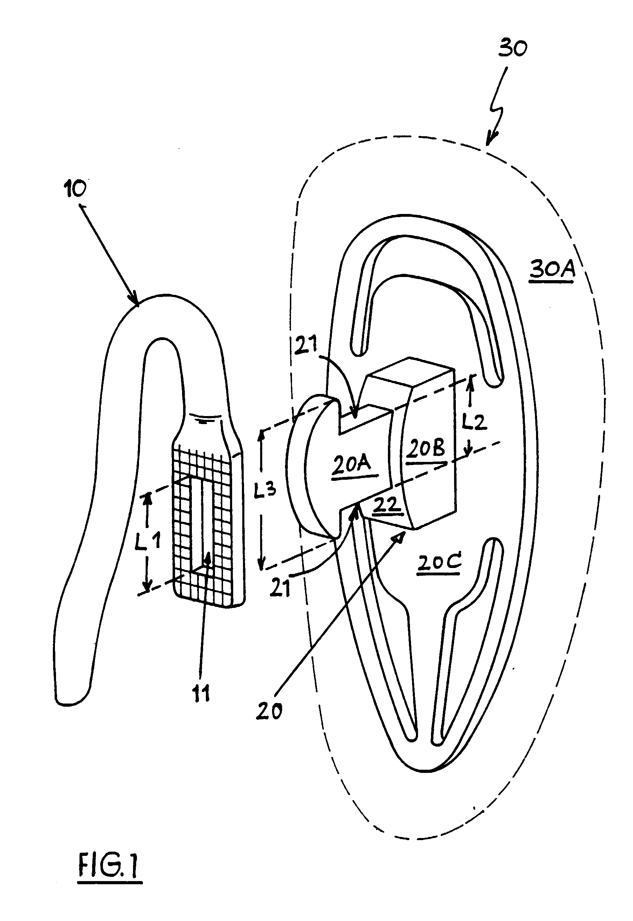

Die Montage des Befestigungsteils 20 im Langloch 11 der Stegstütze 10 erfolgt nun dergestalt, daß zunächst eine "Ecke" des pilzförmigen vorderen Abschnittes durch das Langloch hindurchgesteckt wird, wobei sich der Nasenpad in einer gegenüber der in Figur 1 dargestellten Position verschwenkten Lage befindet. Danach wird unter Verformung des vorderen Pilzabschnittes der andere Teil in das Langloch 11 eingedrückt, so daß bei diesem Vorgang die beiden Enden des pilzförmigen Abschnittes in gegenläufiger Richtung beansprucht werden.

In der Montageposition kann dann die Stegstütze 10 auf der Einschnürung 21 des vorderen Abschnitts 20A entlanggleiten, wobei die Übergangsfläche 22 sowohl als Anschlag dient, an dem sich in der Trageposition das Nasenpad in der Regel befinden wird, als auch als "Abrollfläche" an der sich das Nasenpad an der Stegstütze abstützt und an der es im vorgegebenen Bereich stufenlos verschwenkbar und kippbar ist.

Die weiteren baulichen Einzelheiten sind den Zeichnungen zu entnehmen, in denen eine besonders bevorzugte Ausführungsform im Hinblick auf die angegebenen Bemaßungen dargestellt ist.

## Patentansprüche

1. Halterung für Nasenpads an einem Brillengestell, bestehend aus einer im wesentlichen U-förmigen symmetrisch verwendbaren Stegstütze (10), deren erster Schenkel für die Befestigung an der Brillenfassung vorgesehen ist, und deren zweiter Schenkel an seinem Ende einen abgeflachten Bereich mit einer Aufnahmeöffnung aufweist, und aus einem Befestigungsteil (20) für den Nasenpad aus Kunststoff, das in die Aufnahmeöffnung der Stegstütze einführbar und dort gelenkig verrastbar ist, in dem der Rand der Aufnahmeöffnung mit Spiel in eine Einschnürung des Befestigungsteils eingreift, wobei das im wesentlichen längliche und ungeschlitzt ausgeführte Befestigungsteil einen pilzähnlich ausgebildeten vorderen Abschnitt (20A) aufweist, der die Einschnürung (21) mit einem ersten Querschnitt beinhaltet, sowie einen hinteren Abschnitt (20B) mit einem zweiten, größeren Querschnitt,
dadurch gekennzeichnet, daß die Aufnahmeöffnung der Stegstütze (10) vom dort weitgehend unelastischen, maximal 1,1 mm dicken Material der Stegstütze (10) vollständig umschlossen und als Langloch (11) ausgebildet ist, und daß die Übergangsfläche (22) zwischen den beiden Abschnitten (20A,20B) des aus elastisch verformbarem Kunststoff gebildeten Befestigungsteils (20) zum vorderen Abschnitt (20A) hin gewölbt ist, und daß der Querschnitt des Langlochs (11), die beiden Querschnitte und die Wölbung der Übergangsfläche (22) so aufeinander abgestimmt sind, daß in der Rastposition des Befestigungsteils (20) in der Stegstütze (10) der Nasenpad (30) unter Abstützung an der Wölbung der Übergangsfläche (22) stufenlos verschwenkbar und kippbar ist.

2. Halterung nach Anspruch 1, dadurch gekennzeichnet, daß die Länge (L1) des Langlochs (11) die Länge (L2) der Einschnürung (21) um 20% bis 50% übersteigt.

3. Halterung nach Anspruch 1, dadurch gekennzeichnet, daß der Querschnitt des Langlochs (11) der Stegstütze (10) den ersten Querschnitt der Einschnürung (21) um 20% bis 60% übersteigt.

4. Halterung nach Anspruch 1, dadurch gekennzeichnet, daß das pilzförmige Ende (20A) des vorderen Abschnitts das Langloch (11) der Stegstütze (10) im verrasteten Zustand hintergreift.

5. Halterung nach Anspruch 1, dadurch gekennzeichnet, daß der Radius (RW) der Wölbung der Übergangsfläche (22) zwischen 5 und 20 mm, insbesondere 9 mm, beträgt.

6. Halterung nach den Ansprüchen 1-4, gekennzeichnet durch folgende Bemaßung:
a) das Langloch (11) ist 2,6 mm lang und 1,1 mm breit,
b) der erste Querschnitt der Einschnürung (21) beträgt 2,0 x 1,4 mm
c) die maximale Länge (L3) des pilzförmigen Endes des vorderen Abschnitts (20A) beträgt 3,8 mm.

7. Halterung nach Anspruch 1, dadurch gekennzeichnet, daß Befestigungsteil (20) und Nasenpad (30) einstückig sind.

8. Halterung nach Anspruch 1, dadurch gekennzeichnet, daß das Befestigungsteil (20) einstückig mit einem Kern (20C) innerhalb des Nasenpads (30) ist, der mit einem Mantel (30A) aus weichem, hautverträglichen Kunststoff wie z.B. Silikon umspritzt ist.

9. Halterung nach Anspruch 7 oder 8, dadurch gekennzeichnet, daß das Befestigungsteil (20) eine Kugeldruckhärte von 90...120 aufweist.

10. Halterung nach Anspruch 1, dadurch gekennzeichnet, daß die Stegstütze (10) vollständig aus einem Metalldraht, wie z.B. Edelstahl oder Neusilber, geformt ist.

## Claims

1. Holder for nose pads on a spectacle frame, comprising a substantially U-shaped bridge support (10), which is symmetrically usable, the first portion of which is provided for securement on the spectacle frame, and the second portion of which has at its end a flattened region with a receiving aperture, and comprising a securing member (20) for the nose pad, which member is formed from plastics material, is insertable into the receiving aperture in the bridge support and is pivotally locatable there, in that the edge of the receiving aperture engages with clearance in a constricted portion of the securing member, the substantially elongate and unslotted securing member having a mushroom-shaped front portion (20A), which includes a constricted portion (21) with a first cross-section, and having a rear portion (20B) with a second, greater cross-section, characterised in that the receiving aperture in the bridge support (10) is completely surrounded by the material of the bridge support (10), which material is largely non-resilient there and has a maximum thickness of 1.1 mm, and said aperture is configured as elongate slot (11), and in that the transitional face (22) between the two portions (20A, 20B) of the securing member (20), which is formed from resiliently deformable plastics material, is curved towards the front portion (20A), and in that the cross-section of the elongate slot (11), the two cross-sections and the curvature of the transitional face (22) are so adapted to one another that, when the securing member (20) is in the locking position in the bridge support (10), the nose pad (30) is steplessly pivotable and tiltable when supported on the curvature of the transitional face (22).

2. Holder according to claim 1, characterised in that the length (L1) of the elongate slot (11) exceeds the length (L2) of the constricted portion (21) by between 20 % and 50 %.

3. Holder according to claim 1, characterised in that the cross-section of the elongate slot (11) in the bridge support (10) exceeds the first cross-section of the constricted portion (21) by between 20 % and 60 %.

4. Holder according to claim 1, characterised in that the mushroom-shaped end (20A) of the front portion engages behind the elongate slot (11) in the bridge support (10) in the fitted state.

5. Holder according to claim 1, characterised in that the radius (RW) of the curvature of the transitional face (22) is between 5 mm and 20 mm, more especially 9 mm.

6. Holder according to claims 1-4, characterised by the following dimensions:
a) the elongate slot (11) is 2.6 mm long and 1.1 mm wide,
b) the first cross-section of the constricted portion (21) is 2.0 x 1.4 mm,
c) the maximum length (L3) of the mushroom-shaped end of the front portion (20A) is 3.8 mm.

7. Holder according to claim 1, characterised in that the securing member (20) and nose pad (30) are integral.

8. Holder according to claim 1, characterised in that the securing member (20) is integral with a core (20C) internally of the nose pad (30), which core is injection-moulded with a cover (30A) from soft, skin-compatible plastics material, such as silicone for example.

9. Holder according to claim 7 or 8, characterised in that the securing member (20) has a conical-indentation hardness of 90...120.

10. Holder according to claim 1, characterised in that the bridge support (10) is formed completely from a metal wire, such as stainless steel or nickel silver for example.

## Revendications

1. Système de fixation de plaquettes sur une monture de lunettes, constitué d'un support pont (10) sensiblement en forme de U et utilisable symétriquement dont la première branche est prévue pour la fixation à la monture de lunettes et la deuxième branche présente à son extrémité une partie aplatie ayant une ouverture réceptrice, et d'un élément (20) pour la fixation de la plaquette en plastique qui peut être introduit dans l'ouverture réceptrice du support pont et y être encliqueté de manière articulée par engagement du bord de l'ouverture réceptrice, avec du jeu, dans un étranglement de l'élément de fixation, l'élément de fixation, dans l'ensemble de forme allongée et non fendu, présentant une partie avant du genre champignon (20A) qui contient l'étranglement (21), d'une première section, et une partie arrière (20B) d'une deuxième section plus grande,
caractérisé par le fait que l'ouverture réceptrice du support pont (10) est entourée complètement par la matière, à cet endroit pratiquement inélastique et d'au plus 1,1 mm d'épaisseur, du support pont (10), et est formée d'un trou allongé (11), que la surface de jonction (22) entre les deux parties (20A, 20B) de l'élément de fixation (20), formé de plastique déformable élastiquement, est bombée vers la partie avant (20A), et que la section du trou allongé (11), les deux sections et le bombement de la surface de jonction (22) sont accordés entre eux de façon que dans la position encliquetée de l'élément de fixation (20) dans le support pont (10), la plaquette (30) puisse pivoter et basculer de manière progressive avec appui sur le bombement de la surface de jonction (22).

2. Système de fixation selon la revendication 1, caractérisé par le fait que la longueur (L1) du trou allongé (11) dépasse de 20 % à 50 % la longueur (L2) de l'étranglement (21).

3. Système de fixation selon la revendication 1, caractérisé par le fait que la section du trou allongé (11) du support pont (10) dépasse de 20 % à 60 % la première section de l'étranglement (21).

4. Système de fixation selon la revendication 1, caractérisé par le fait que l'extrémité en forme de champignon (20A) de la partie avant, à l'état encliqueté, est appliquée derrière le trou allongé (11) du support pont (10).

5. Système de fixation selon la revendication 1, caractérisé par le fait que le rayon (RW) du bombement de la surface de jonction (22) est compris entre 5 et 20 mm, en particulier de 9 mm.

6. Système de fixation selon les revendications 1 à 4, caractérisé par les dimensions suivantes :
a) le trou allongé (11) a 2,6 mm de long et 1,1 mm de large,
b) la première section de l'étranglement (21) est de 2,0 x 1,4 mm,
c) la longueur maximale (L3) de l'extrémité en forme de champignon de la partie avant (20) est de 3,8 mm.

7. Système de fixation selon la revendication 1, caractérisé par le fait que l'élément de fixation (20) et la plaquette (30) forment une seule pièce.

8. Système de fixation selon la revendication 1, caractérisé par le fait que l'élément de fixation (20) fait corps avec un noyau (20C) situé à l'intérieur de la plaquette (30) qui est enveloppé d'une gaine (30A) en plastique souple compatible avec la peau comme par exemple silicone.

9. Système de fixation selon l'une des revendications 7 et 8, caractérisé par le fait que l'élément de fixation (20) a une dureté à la bille de 90 à 120.

10. Système de fixation selon la revendication 1, caractérisé par le fait que le support pont (10) est formé entièrement d'un fil métallique par exemple en acier spécial ou en maillechort.
